# EUROPEAN PATENT APPLICATION

(11) **EP 3 747 255 A1**
(43) Date of publication of application: **09.12.2020**
(21) Application number: 19178879.3
(22) Date of filing: 06.06.2019
(51) Int. Cl.: A01G 7/04

(54) **A METHOD FOR EFFICIENT USE OF LIGHT ENERGY TO ADVANCE PLANT GROWTH**

(71) Applicant: Redpath, Richard, Cary, NC 27513 (US)
(72) Inventor: Redpath, Richard, Cary, NC 27513 (US)
(74) Representative: Loo, Chi Ching

(57) **Abstract**

The present invention relates to a method for stimulating biological processes for growth of plants by illuminating with coherent light, such as a laser lamp (100), to deliver the required energy at the growth stage to advance absorption while minimize cost for energy to produce a biological product for photosynthesis based biological growth of plants including Algae, Diatoms, Phytoplankton, Euglena, Anoxygenic Photosynthetic Bacteria.

## Description

### BACKGROUND OF THE INVENTION

Prior art such as US patent 4,109,414 describe a method whereby plants are illuminated in narrow spectral bands during night periods. Furthermore, US patent 5,102,609 describes light for plants in three wavelength bands 620-650nm, 700-760nm and 400-500nm. Additionally, EPO patent 1,450,595 describes a method of accelerating growth of plants using preferably 638nm and 435nm and 451nm wavelengths. In all, these processes are finding the specific wavelengths to alleviate the waste of unneeded wavelength energy of which the biological process cannot use that would be considered a hindrance to efficient biological processes as the unused wavelength energy is a heat source given the plant would trap the energy and reduce the efficiency of the biological processes.

It is an object of the invention to provide coherent light source (laser light) of specific wavelengths that can reduce reflection from the leaf cuticle that is a protecting film covering the epidermis of the leaves to deliver more direct energy to the photosynthesis biological processes this includes the penetration of cell walls for Algae, Diatoms, Phytoplankton, Euglena, Anoxygenic Photosynthetic Bacteria.

Chlorophyll is photosynthesis for plants to absorb energy and carry out the biological processes. Chlorophyll absorbs light most strongly in the blue portion of the electromagnetic spectrum, followed by the red portion. Absorbed light not used by light-activated chlorophyll essentially none of the alternative reactions occur, the absorbed light energy will be released as heat (Rosenqvist and va Kooten 2003). Reducing the heat production will enable efficient biological processes to occur as well as efficiently use energy for the plant product.

Another object of the invention is to provide specific wavelength(s) of coherent light for the efficient use of energy for the biological stages of growth such as root development and then followed by leaf development.

Furthermore another object of the invention is to provide a means to expand a laser beam with preservation of coherence as well as using an inexpensive and safe system to perform this operation.

Finally, another object of the invention is to produce less light pollution using an expanded laser beam which has highly focused energy toward the destination avoiding excessive, misdirected, or obtrusive artificial (released to outdoor) light currently produced by greenhouses. Too much light pollution has consequences: it washes out starlight in the night sky, interferes with astronomical research, disrupts ecosystems, has adverse health effects by disturbing neighboring areas, and wastes energy.

### DETAIL DESCRIPTIONS OF THE INVENTION

The invention is to expand a laser beam to deliver coherent light (Laser lamp) to a biological process to efficiently deliver well known wavelengths for biological/photosynthetic organism growth. To be distinguished from colored light sources used today such as LED, such a laser lamp (e.g. expanded laser beam) preserves coherence for light and can be used to view a transmission hologram; a transmission hologram cannot be seen without coherent light.

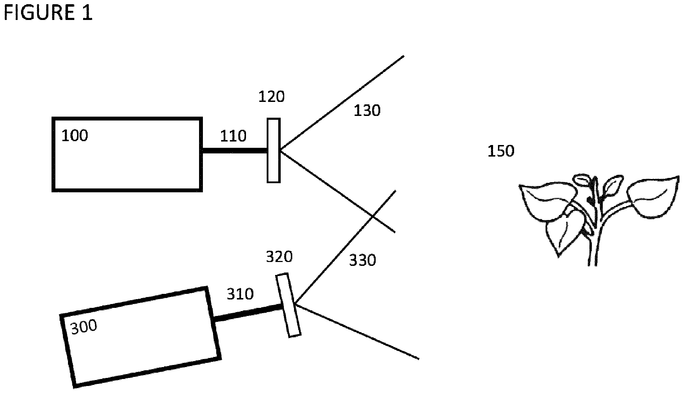

Referring to Figure 1 at 100 is a laser which produces a laser beam at 110. At 120 is a laser beam expander retaining the coherence characteristic of the laser light source at 130. At 150 is the biological destination source for growth. At 300 is an additional laser source of a number of laser sources that can be added to illuminate more the biological source at 150. At 310 is the laser beam impacting the laser beam expander at 320 to produce retained coherent light at 330. At 320 for a cost effective solution a frosted glass substrate such as optical glass BK7, quartz or optical polycarbonate can be used to expand the laser beam with retaining the coherence aspect of the laser light toward the biological destination source for growth of a photosynthetic organism.

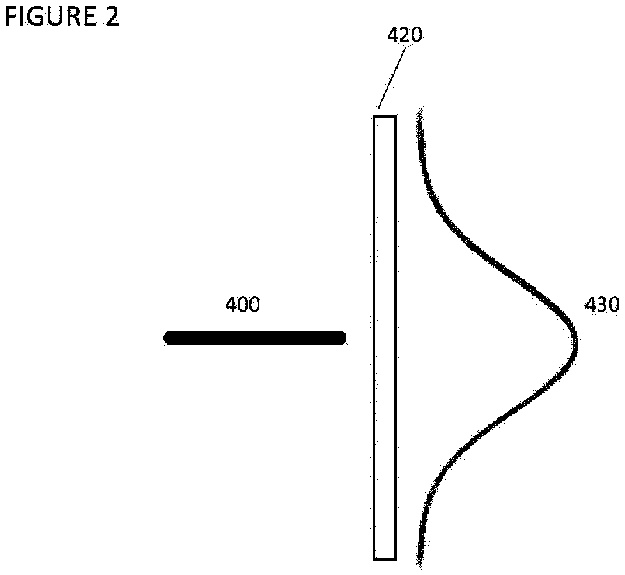

Referring to Figure 2 at 400 is a laser beam impacting a glass substrate such as BK7, quartz or optical polycarbonate at 420 which is a frosted glass substrate for inexpensive optimal gaussian expanding of the laser beam at 430 experimentally found to be 800 grit. At 430 is an expanded laser beam to illuminate an area which is coherent light.

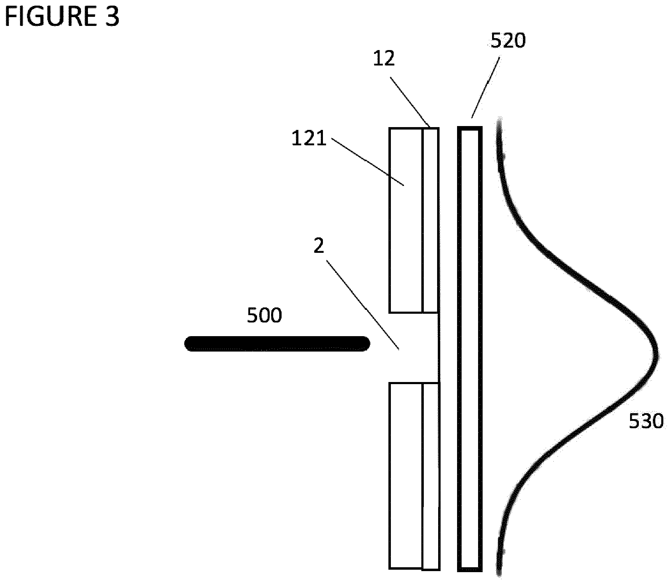

Referring to Figure 3 at 500 is a laser beam that is transmission through a hole at 2 of a mirror element base at 121 with mirror side at 12 sandwiched and facing frosted glass substrate such as BK7, quartz, or optical polycarbonate at 520, said beam at 500 to impact 520 to produce gaussian expansion of laser beam with retaining the coherence aspect of the laser light source at 530.

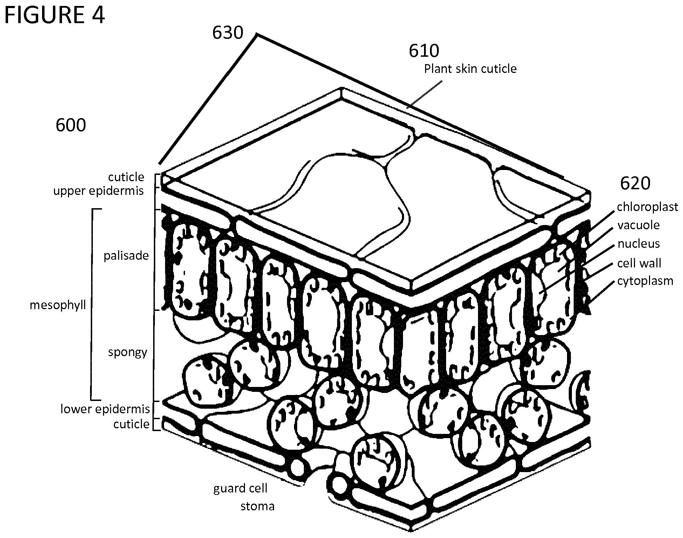

Referring to Figure 4 at 600 is a diagram of a plant leaf, at 610 is the plant cuticle a protective, hydrophobic, waxy coverings produced by the epidermal cells of leaves, and all other aerial plant organs. Cuticles minimize water loss and effectively reduce pathogen entry due to their waxy secretion additionally they are an optical barrier to efficient light energy delivery to chloroplasts at 620 for growth. At 630 is gaussian modeled coherent light source that is to impact to the cuticle at 610 to penetrate to reach more energy to the chloroplasts for biological processing for growth.

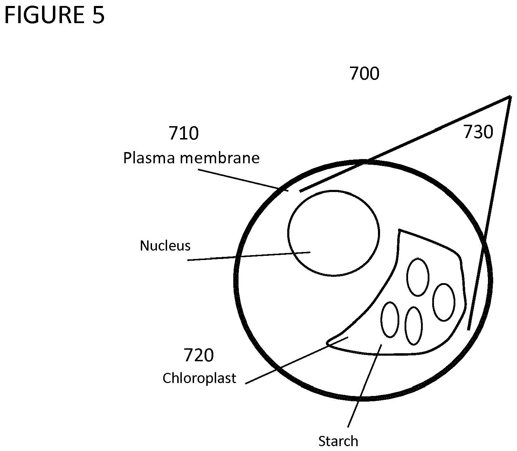

Referring to Figure 5 at 700 is a diagram of an Algae cell, at 710 is a Plasma membrane a cell wall composed of components such as cellulose, proteins, agar, carrageenan, silicates, algin, calcium carbonate they are an optical barrier to efficient light energy delivery to chloroplasts at 720 for growth. At 730 is gaussian modeled coherent light source that is to impact to the membrane to penetrate to reach more energy to the chloroplasts for biological processing for growth.

Additionally, the Coherent light (laser lamp) to achieve efficient use of energy for the biological process of growth a staged approach is used for the use of the ratio and type of laser lamp wavelength. For commercial green leaf sprout development, a single Blue Laser lamp is used for the initial germination stage of the plant and then followed by two laser lamps one Blue and one Red. In this manner, less lamps area used and therefore less energy is consumed to produce the biological product.

## Claims

1. A method for efficiently using a light energy for a photosynthesis based biological growth comprising:
rendering a form of a light to be coherent.

2. A method according to claim 1 comprising:
expanding a laser beam with standard optics for preservation of the coherence to illuminate an area for photosynthesis based biological growth.

3. A method according to claim 1 comprising:
staging the use of different coherent bands at different stages of photosynthesis based biological growth to use less energy and match growth needs for the development of a final product.

4. A method of using frosted glass substrate such as BK7, quartz or polycarbonate as a Gaussian diffuser for expanding a laser beam for illumination to retain coherence of light source to illuminate an area for photosynthesis based biological growth.

5. A method as claimed in claim 4, the frosted glass is optimally selected as 800 to 1200 grit for laser beam impacting to produce expanded laser beam to illuminate an area for photosynthesis based biological growth.

6. A method as claimed in claim 4, using a mirror with hole between the laser beam and the frosted glass diffuser as a sandwich to optimally magnify retained coherence of the light source.
